# EUROPEAN PATENT SPECIFICATION

(11) **EP 2 394 490 B1**
(45) Date of publication and mention of the grant of the patent: **16.10.2019**
(21) Application number: 09779011.7
(22) Date of filing: 03.02.2009
(51) Int. Cl.: H04W 36/00, H04W 76/11

(54) **METHOD AND COMMUNICATION ENTITY FOR PROVING A COMMUNICATION CONNECTION**
METHODE UND KOMMUNIKATIONSGERÄT ZUR BEREITSTELLUNG EINER TELEKOMMUNIKATIONSVERBINDUNG
PROCÉDÉ ET ENTITÉ DE COMMUNICATION PERMETTANT UNE CONNEXION DE COMMUNICATION

(43) Date of publication of application: 14.12.2011
(73) Proprietor: Nokia Solutions and Networks Oy, 02610 Espoo (FI)
(72) Inventor: WOLFNER, Gyorgy Tamas, H-1144 Budapest (HU); ROPOLYI, Robert, 3108 Victoria (AU)
(74) Representative: Style, Kelda Camilla Karen
(86) International application number: PCT/EP2009/051207
(87) International publication number: WO 2010/088953

(56) References cited:
- EP-A- 1 246 479
- WO-A-2009/083429
- CN-A- 101 286 915
- ERICSSON: "3GPP TSG SA WG2 MEETING #65; APN Decoration; S2-083282" [Online] 12 May 2008 (2008-05-12), 3GPP TSG SA WG2 MEETING #65, PRAGUE, PAGE(S) 1 - 2 , XP002525737 Retrieved from the Internet: URL:http://www.3gpp.org/ftp/tsg_sa/WG2_Arc h/TSGS2_65_Prague/docs/?C=M> [retrieved on 2009-05-27] the whole document
- ERICSSON: "3GPP TSG SA WG2 MEETING #63; S2-081363; TE PDN connectivity" [Online] 18 February 2008 (2008-02-18), 3GPP TSG SA WG2 MEETING #63, ATHENS, PAGE(S) 1 - 2 , XP002525739 Retrieved from the Internet: URL:http://www.3gpp.org/ftp/tsg_sa/WG2_Arc h/TSGS2_63_Athens/Docs/?C=M> [retrieved on 2009-04-27] the whole document
- 3GPP: "3rd Generation Partnership Project; Technical Specification Group Services and System Aspects; Architecture enhancements for non-3GPP accesses (Release 8)", 3RD GENERATION PARTNERSHIP PROJECT (3GPP); TECHNICALSPECIFICATION (TS) , no. TS 23.402 V8.0.0 1 December 2007 (2007-12-01), pages 1-131, XP002525736, Retrieved from the Internet: URL:http://www.3gpp.org [retrieved on 2007-12-01]

## Description

### Technical field of the invention

The present invention relates to wireless communication in general. More particularly, it relates to a method for providing a communication connection, a communication entity, a computer-readable medium and a program element. In particular, it relates to the use of a unique connection ID for identifying communication connection according to the proxy mobile IP protocol between a serving gateway and a packet data network gateway.

### Background of the invention

In mobile communication, mobile communication devices may support more than one coexisting communication connection at any one time, in particular more than one packet data network connection between a user side, i.e. a user equipment, like for example a mobile phone and a target communication entity.

This may require that all communication entities that are part of said communication connection also support the use of multiple, parallel communication connections between said user equipment and said target communication entity.

The target communication entity may be addressed by an Access Point Name (APN) in 3GPP Evolved Packet System (EPS) using an access technology like for example 3GPP GERAN (GSM EDGE Radio Access Network), 3GPP UTRAN (UMTS Terrestrial Radio Access Network) or 3GPP E-UTRAN (Evolved Universal Terrestrial Radio Access Network) to the Evolved Packet Core (EPC).

Using Proxy Mobile IP interfaces, a communication connection may be addressed or identified using the mobile node ID (MN-ID, an ID of mobile communication device or user equipment of a user) and the Access Point Name (APN) of the target communication entity as identifier, which may be employed in conjunction to differentiate individual packet data network connections.

Thus, multiple, parallel packet data network connections of a user equipment to the same Access Point Name via Proxy Mobile IP based S5/S8 may be not supported since the connection may only be determined via IDs unique to the relevant end points of a communication connection, thus remain constant for each communication connection between said end points.

There may be a need to provide multiple parallel packet data network communication connections between a user equipment and a single APN, in particular between a serving gateway and a PDN gateway over either S5 or S8 interfaces using the Proxy Mobile IP protocol.

3GPP TS23.401 EAV 8.4.1 (2008-12) - "General Packet Radio Service (GRPS) Enhancements for Evolved Universal Terrestrial Radio Access Network (E-UTRAN) Access (Release 8)" and 3GPP TS23.402 V 8.4.1 (2009-01) - "Architecture Enhancements for Non-3GPP Accesses (Release 8)" describe the architecture of the evolved packet core.

3GPP TS 23.302 EAV 8.4 (2008-12) - Network architecture (Release 8) describes 3GPP GERAN, 3GPP UTRAN and 3GPP E-UTRAN access technologies.

3GPP TS29.275 EAV 8.1 (2008-12) - "Proxy Mobile IPv6 (PMIPv6) based Mobility and Tunnelling protocols; Stage 3 (Release 8) and TS23.402 describe the Proxy Mobile IP based S5/S8 interface protocol.

IETF RFC 5213 "Proxy Mobile IPv6" [August 2008] describes Proxy Mobile IPv6.

IETF RFC 5094 "Mobile IPv6 Vendor Specific Option" [December 2007] describes Mobile IPv6 Vendor Specific Option extension.

IETF internet draft "GREkey" option for Proxy Mobile IPv6 describes the GREkey option for Proxy Mobile IPv6.

EP 2290883 A1 discloses an access control method and system for packet data network, Policy and Charging Rules Function (PCRF) entity, the method includes: a policy and charging rulers function entity receiving a gateway control session establishment indicating message from a bearer binding and event report function entity.

### Summary of the invention

In the following, a method for providing a communication connection, a communication entity, a computer-readable medium and a program element according to the independent claims are provided.

According to an exemplary embodiment of the present invention, a method for providing a communication connection is provided, comprising determining a unique connection ID, storing the unique connection ID in a first communication entity and providing the unique connection ID to a second communication entity for establishing of the communication connection identified by the unique connection ID and providing to the second communication entity an indication for handover of the communication connection identified by the unique connection ID, wherein the communication connection is a communication connection according to the Proxy Mobile IP protocol, wherein the unique connection ID comprises a mobile node ID, an access point name and a bearer ID, and wherein handover of the communication connection, identified by the unique connection ID, is between the first communication entity and a third communication entity, and
wherein the mobile node ID, the access point name and the bearer ID of the unique connection ID remain the same during handover. According to a further exemplary embodiment of the present invention, a communication entity is provided, comprising a determination unit for determining a unique connection ID, a storing unit for storing the unique connection ID and a sending and receiving unit adapted to transmit an indication for handover of a communication connection identified by the unique connection ID, wherein the communication connection is a communication connection according to the Proxy Mobile IP protocol, wherein the unique connection ID comprises a mobile node ID, an access point name and a bearer ID, wherein handover of the communication connection, identified by the unique connection ID, is between the communication entity and another communication entity, and wherein the mobile node ID, the access point name and the bearer ID of the unique connection ID remain the same during handover.

According to a further example of the present invention, the use of a unique connection ID for identifying a communication connection, in particular according to the Proxy Mobile IP protocol, more in particular between a serving gateway and a packet data network gateway.

According to a further exemplary embodiment of the present invention, a computer-readable medium is provided in which a computer program is stored, which computer program, when being executed by a processor is adapted to carry out the method for providing a communication connection.

According to a further exemplary embodiment of the present invention, a program element is provided, which program element, when being executed by a processor, is adapted to carry out the method for providing a communication connection.

An aspect of the present invention may be providing a solution for establishing multiple packet data network connections between a user equipment and an Access Point Name, in particular when the user equipment camps in a 3GPP access system using Proxy Mobile IP based S5/S8.

When using the Proxy Mobile IP protocol for establishing communication connection more than one communication between a user equipment, e.g. a mobile communication device, and a specific APN (i.e. a target system the user equipment wants to establish the communication connection to) may be required. This may for example be because the user equipment provides network connections for more than one user (e.g.
the user equipment provides access to EPS for two laptop computers) who want to access the services behind the same APN.

Since a communication connection using the PMIP protocol regularly is referenced using the mobile node ID of the user equipment located at one end of the communication and the APN of the target system at the other end of the communication connection, multiple communication connections from a specific UE to a specific APN may currently not be established.

In particular, the communication connection between a serving gateway and a PDN gateway, both connected via either a S5 or a S8 interface. may be referenced by the aforementioned parameters MN-ID and APN, thus using said parameters, only one concurrent communication connection between a user equipment and an APN may be established between a specific serving gateway and a specific PDN gateway. S5 and S8 interfaces may have the same functionality, but the S5 interface may be used within a single Public Land Mobile Network (PLMN) (it may either be in a Home Public Land Mobile Network (HPLMN) or a Visitor Public Land Mobile Network (VPLMN)), while S8 may in particular be used when the serving gateway is in the VPLMN and PDN gateway is in the HPLM, i.e. the S5 interface may in particular be an intra-operator interface while the S8 interface may in particular be an inter-operator interface. This may mean that S8 may only occur in a roaming scenario while S5 may only occur in non-roaming scenario. However, S5 may also be used in the roaming scenario when the SGW and the PDN-GW are in the VPLMN. The SGW may always be in the VPLMN.

A communication connection may further be referenced by further connection information. In particular, the EPS bearer ID of a communication connection may be employed to reference communication connection and thus distinguish multiple PDN connections over S5/S8 to a specific APN. Also, the uplink GREkey may be used to reference and distinguish individual, multiple parallel PDN communication connections when employing PMIP over S5/S8 interfaces between a serving gateway and a PDN gateway.

This further connection information may be presented to the serving gateway and may then be provided from the serving gateway to the PDN gateway for distinguishing a certain communication connection by MN-ID, APN and the further connection information, the PDN connection tag, in particular the EPS Bearer ID or the uplink GREkey. One way to provide the PDN gateway with the additional further connection information is by employing the "Proxy Binding Update"-message.

In particular, the PBU-message may feature a specific extension, the Vendor Specific Mobility Option (VSMO). The VSMO may allow individual parameters to be included in the PBU-message when negotiating, establishing and/or handing over a communication connection between a serving gateway and a PDN gateway without the necessity to globally define (i.e. agree on a global standard) the transmission of or the VSMO itself.

The use of an according VSMO or a subtype thereof may also provide backwards compatibility. In case the PDN gateway does provide the feature of distinguishing different PDN connections also by the PDN connection tag, it may acknowledge the VSMO or the subtype so the serving gateway may determine that the PDN gateway allow multiple, parallel PDN connection between a specific UE and a specific APN by employing the further connection information. Thus, a further/multiple communication connection(s) may be established between the serving gateway and the PDN gateway.

The following explanations and definitions are used in the context of the present text.

| | |
|---|---|
| Proxy Mobile IP: | The Proxy Mobile IP (protocol) may be understood as a network based mobility management that enables IP mobility for a host without requiring its participation in any mobility-related signalling. The network may be considered to be responsible for managing IP mobility on behalf of the host. The mobility entities in the network are responsible for tracking the movements of the host and initiating the required mobility signalling on its behalf. |
| User equipment: | A user equipment may be any communication device, in particular a mobile communication device, that resides at the user end of the communication connection. A user equipment may in particular be understood as a mobile phone, a PDA or a wireless computer. |
| Mobility management | entity: A MME may be seen as the key control node for a mobile communication network as it is responsible to control the handover related procedures and keeping track the user equipment location. The MME may be in particular responsible for tracking of the user equipment paging procedures. It may also be involved in the bearer activation/deactivation process and may also be responsible for choosing a serving gateway for a user equipment at the initial attach and at time of intra network handover or node relocation. Also, it may be responsible for authenticating the user. |
| Serving gateway: | The serving gateway may route and forward user data packets, while may also act as local anchor point for intra-network mobility (like mobility within a LTE access). |
| Packet data network gateway: | The PDN gateway may provide connectivity to the user equipment to external packet data networks by being the point of entry and exit of traffic for the user equipment. It may provide the local mobility anchor function. A user equipment may have simultaneous connectivity with more than one PDN gateway for accessing multiple packet data networks. A PDN gateway may perform policy enforcement, packet filtering for each user, charging support, lawful interception and packet screening. Another aspect of the PDN gateway may be seen as the anchor for mobility between 3GPP and non-3GPP technologies. |
| Bearer: | In connection-oriented transmission networks a bearer may be seen as a "virtual connection" between two end points (e.g. a user equipment and a PDN gateway) which has to be established before any data may be sent between them. A bearer ID identifier or EPS (Evolved Packet System) bearer ID may be understood as a (unique) identification of a bearer, i.e. of a virtual connection. In particular, with Proxy Mobile IP based S5/S8, the bearer may extend between the user equipment and the serving gateway. |
| GREkey: | GREkeys (Generic Routing Encapsulation Keys) may be used for marking downlink and uplink traffic that belong to a specific mobile node session or a specific flow. GREkeys may be used to identify the specific mobile node session or a specific flow. GREkeys may relate to a new mobility option for allowing the mobile access gateway and a local mobility anchor to negotiate GRE encapsulation mode. |
| Vendor specificoption: | Vendor specific messages may allow vendors to implement extensions to protocols or distinguish themselves from other vendors. According messages may be marked by a vendor ID, identifying the specific vendor. The vendor specific mobility option may be provided in a mobility header message, allowing vendor specific extensions to the mobility header message, so that vendors are able to individually extend a cer-tain protocol for their individual requirements without the need for a dedicated standardization procedure. 3GPP may use the vendor specific option to extend protocols defined by other Standardization Organization such as IETF in order to fulfil 3GPP specific requirements. |
| Local mobility anchor: | A local mobility anchor may be understood as the home agent for a mobile node in Proxy Mobile IPv6 domain. It may be the topological anchor point for the mobile node's home network. This means it is does not change during the lifetime of a session (i.e. a communication connection) even if the location of the mobile node changes (e.g. the mobile node handovers from one access technology to another one). |
| Mobile access gateway: | The mobile access gateway may be in particular a function on an access router that manages mobility related signalling for a mobile node, e.g. a user equipment, that is attached to its access link. The mobile access gateway may be responsible for tracking the mobile node movement to and from the access link and for signalling the mobile node local mobility anchor, thus establishing a communication connection to the local mobility anchor. |

The present invention relates in particular to the implementation of a new function in the procedure for multiple PDN support to a single APN. The procedure may comprise the definition of a logical information element, e.g. called a PDN connection tag, which may comprise a unique ID for each PDN connection over Proxy Mobile IP based interfaces between a serving gateway and a PDN gateway.

The logical information element, a unique connection ID, may be one of the EPS bearer ID of the default bearer or may be the uplink GREkey. The unique connection ID/PDN connection tag may be part of the Proxy Binding Update messages sent from a serving gateway to a PDN gateway and may be stored in the MME (as a part of the user equipment context).

As the unique connection ID may remain the same during handovers, the MME may send the unique connection ID to the new serving gateway among other PDN connection information elements in case the serving gateway is changed during a handover procedure.

In 3GPP access technologies bearers may in particular be used to convey the user packets. All bearers may belong to a specific PDN connection and EPS bearer ID may be used to identify a bearer within the scope of user equipment. The EPS bearer ID does not change during the lifetime of a bearer even if there is change in the MME and/or in the serving gateway as a result of a handover.

In 3GPP access technologies there may be multiple bearers within a single packet data network connection, while in Proxy Mobile IP there may substantially be a 1:1 mapping between the PDN connection and the Proxy Mobile IP tunnel. Each PDN connection has a single default bearer. The default bearer may the first bearer created when a new PDN connection is to be established. Furthermore the bearer may remain identical and may not be removed during the lifetime of the PDN connection. Accordingly, the EPS bearer ID of the default bearer may be used to identify a PDN connection over Proxy Mobile IP based S5/S8.

The uplink GREkey may be created by the packet data network gateway when a Proxy Mobile IP tunnel is established. There may be a 1:1 mapping between the PDN connection and the Proxy Mobile IP tunnel. The uplink GREkey does not change during the lifetime of a PDN connection (Proxy Mobile IP tunnel) even if there is change in the MME and/or in the serving gateway as a result of a handover. Accordingly, the uplink GREkey of the Proxy Mobile IP tunnel may be used to identify a PDN connection over Proxy Mobile IP based S5/S8.

In the following further embodiments of the present invention are described referring in particular to the method for providing a communication connection, to a communication entity, to a computer-readable medium and to a program element. However, arbitrary variations and interchanges of single or multiple format or features between the claimed entities is conceivable and within the scope and disclosure of the present patent application. It is also noted that embodiments and aspects of the present invention may be described with respect to different subject-matters. In particular, some embodiments may be described with reference to apparatus type claims whereas other embodiments may be described with reference to method type claims. However, a person skilled in the art will gather from the above and the following description that, unless notified otherwise, in addition to any combination features belonging to one type of subject-matter also any combination between features relating to different subject-matters, in particular between features of apparatus type claims and features of method type claims, is considered to be disclosed within this application.

In the following, further exemplary embodiments of the present invention will be described relating to the method for providing a communication connection. However, these explanations also apply to the communication entity, to the use of a unique connection ID, to a computer-readable medium and to a program element.

By employing the unique connection ID in the process of a handover, the communication connection established in sequence of the handover, i.e. the communication connection between the user equipment and the PDN gateway/APN may be based essentially on the same identification details. Thus, an according handover may be performed substantially transparent.

According to a further exemplary embodiment of the present invention, at least one communication entity may be one entity out of the group consisting of a mobile communication device, a network node, a routing device, a gateway, a user equipment, a mobility management entity, a serving gateway and a packet data network gateway.

The process of determining a unique connection ID may in particular be performed within a mobility management entity or within a packet data network gateway for a connection to a packet data network gateway. A single communication entity may also provide the features of an arbitrary combination of entities.

According to a further exemplary example of the present invention, the unique connection ID may comprise a mobile node ID, an access point name and at least one element out of the group consisting of packet data network connection information, a packet data network connection tag, a bearer ID, a GREkey and an uplink GREkey.

In particular the bearer ID and the GREkey may be considered to provide a straightforward accessible unique ID for identifying a communication connection among communication connections within the scope of mobile node and an Access Point Name -
According to a further exemplary embodiment of the invention the providing of the indication for handover of the communication connection including the unique connection ID may be performed by using a Proxy Binding Update message.

A Proxy Binding Update message may be considered to be a message that is already part of the standardized connection procedure, thus using an according message for providing the unique connection ID in particular may result in the avoidance of a further overhead while establishing a communication connection.

According to a further exemplary embodiment of the present invention, the providing of the indication for handover of the communication connection including the unique connection ID may be performed at least in part by using a Vendor Specific Mobility Option of the Proxy Binding Update message.

Using a Vendor Specific Mobility Option may allow for a transparent, backward compatible implementation of the features of the present patent application without the requirements of a globally agreed upon amendment/extension of a specific standard.

At least one element of the unique connection ID may thus be transported or transmitted by using the VSMO, while other elements, in particular the MN-ID and the APN may be not transmitted in the VSMO. Also, using a further PMIP protocol option to transmit at least one element of the unique connection ID may be conceivable as well.

A further aspect of the invention may be seen in the use of an EPS Bearer ID and/or a GREkey in a "Proxy Binding Update"-message.

These and other aspects of the present invention will become apparent from and elucidated with reference to the embodiments described hereinafter.

Exemplary embodiments of the present invention will be described below with reference to the following drawings.

The illustration in the drawings is schematic. In different drawings, similar or identical elements are provided with similar or identical reference numerals.

The figures are not drawn to scale, however may depict qualitative proportions.

### Brief description of the drawings

- Fig. 1: shows a communication scenario according to an exemplary embodiment of the present invention,
- Fig. 2a: shows a flowchart for a PDN connection creation according to an exemplary embodiment of the present invention,
- Fig. 2b: shows a flowchart for a handover with serving gateway relocation according to an exemplary embodiment of the present invention,
- Fig. 3: shows a communication entity according to an exemplary embodiment of the present invention, and
- Fig. 4: shows a flowchart of the method for providing a communication connection according to an exemplary embodiment of the present invention.

### Detailed description

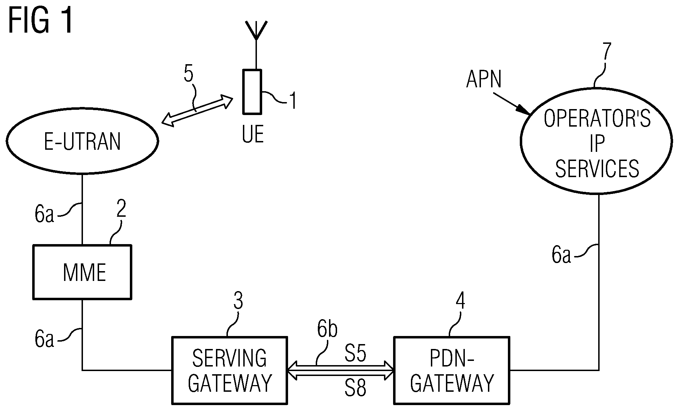

Now referring to Fig. 1, a communication scenario according to an exemplary embodiment of the present invention is depicted.

The user equipment 1, for example a mobile phone, is trying to initiate a communication connection 5. The communication connection 5 may include communication over an air interface (for example employing E-UTRAN) and wired connection.

MME 2 is connected via a communication connection 6a, e.g. a wired communication connection, to the serving gateway SGW 3 SGW 3 and the PDN gateway 4 are connected via a communication connection 6b, e.g. also a wired connection, over a S5 or a S8 interface. Interface S5 may in particular be employed in a non-roaming or roaming environment, while interface S8 may in particular be employed in a roaming environment.

The PDN gateway in turn is connected via communication connection to the network 7 of a service provider. The network 7, in particular different services within the network 7 may be referenced by individual Access Point Names.

Now, in case user equipment 1 wants to initiate a further communication connection to a specific APN, the further parallel, concurrent communication connection would have to be established from UE 1 to the specific APN of network 7.

In case this scenario takes place in a Proxy Mobile IP environment, in particular the communication connection part 6b between the serving gateway 3 and the PDN gateway 4 has to identify this further connection, e.g. by employing an additional PDN connection tag.

Since the further connection may be seen as a further virtual connection having a individual EPS Bearer ID, the PDN connection tag may be the EPS Bearer ID and may be employed for identifying the individual communication connections between serving gateway 3 and PDN gateway 4 together with the MN-ID of UE1 and the specific APN in network 7.

The PDN connection tag may in particular be determined by either MME2 or the serving gateway 3 and be provided via a PBU-message to the PDN gateway 4.

As a further embodiment, the PDN connection tag may be the GREkey, in particular the uplink GREkey, which is allocated by the PDN gateway 4 during the establishment of the communication connection.

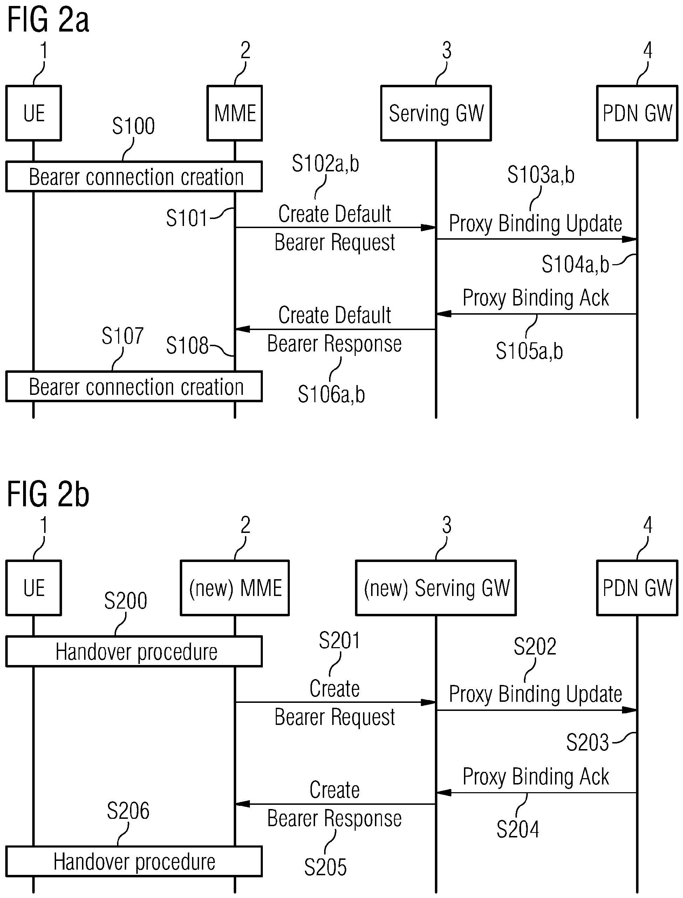

Now referring to Fig. 2a, a flowchart for a PDN connection creation according to an exemplary embodiment of the present invention is depicted.

The unique connection ID, the PDN connection tag, may in particular be the bearer ID or the uplink GREkey. In the following, two examples for establishing of a PDN connection are explained in detail.

In a first example, a unique connection ID comprises the bearer ID.

As a first step S100, user equipment 1 may initiate a PDN connection establishment, e.g. as specified in 3GPP TS 23.401 and 3GPP TS 23.402, indicated in Fig. 2a by "bearer connection creation" S100.

As a next step S101, the MME 2 may create, generate or determine the PDN connection tag (a unique connection ID) and may store the PDN connection tag among the PDN connection information. MME 2 may then send S102a a "create default bearer request"-message to the serving gateway 3, including the PDN connection tag, the unique connection ID, created by MME 2.

Now, the serving gateway 3 may send S103a a "Proxy Binding Update"-message to the PDN gateway 4 including the PDN connection tag received from the MME 2.

The PDN gateway 4 may then store S104a the PDN connection tag and may send S105a a "Proxy Binding Acknowledgment"-message to the serving gateway 3.

The serving gateway 3 in turn may send S106a a "create default bearer response"-message to MME 2.

After that, the PDN connection establishment may continue S107 as specified in 3GPP TS 23.401 and 3GPP TS 23.402.

Messages between the UE and MME and between the MME and the SGW may in particular be defined in TS23.401, while messages between the SGW and PDN GW may in particular be defined in TS23.402

In a second example, a unique connection ID comprises the uplink GREkey.

Again, user equipment 1 may initiate S100 a PDN connection establishment according to 3GPP TS 23.401 and 3GPP TS 23.402.

MME 2 may then send S102b a "create default bearer request"-message to the serving gateway 3 as specified in 3GPP TS 23.402.

Following, the serving gateway 3 may send S103b a "Proxy Binding Update"-message to the PDN gateway 4 as specified in 3GPP TS 23.402.

The PDN gateway 4 now may generate S104b and store a unique connection ID, the PDN connection tag, using the uplink GREkey.

After that, the PDN gateway 4 may send S105b a "Proxy Binding Acknowledgement"-message to the serving gateway 3 including the PDN connection tag created by the PDN gateway 4 using the uplink GREkey.

The serving gateway 3 sends S106b a "create default bearer response" to MME 2 including the PDN connection tag received from the PDN gateway 4.

MME 2 may store S108 the PDN connection tag among the PDN connection information and subsequently the PDN connection establishment continues S107 as specified in 3GPP TS 23.401 and 3GPP TS 23.402.

In other words, a "Proxy Binding Update"-message and/or a "Proxy Binding Acknowledgement"-message according to 3GPP TS23.402 may be utilized for transporting a unique connection ID, which employs at least in part the bearer ID or the uplink GREkey.

Now referring to Fig. 2b, a flowchart for a handover with serving gateway relocation according to an exemplary embodiment of the present invention is depicted.

Independently how the PDN connection tag/unique connection ID was created, the handover procedure may be performed as described in the following:
The handover procedure may be initiated S200 as specified in 3GPP TS 23.401 and 3GPP TS 23.402.

MME 2 may then send S201 a "create bearer request"-message to the serving gateway 3, which is a new serving gateway 3, including the PDN connection tag stored within the PDN connection information.

In case there is a change of the MME 2 required during the handover, then the old MME 2 shall send the PDN connection tag to the new MME 2 within the PDN connection information.

As a next step S202, the new serving gateway 3 may send a "Proxy Binding Update"-message to the PDN gateway 4 including the PDN connection tag received from MME 2 to inform the PDN GW that the new serving gateway provides the connection to that particular PDN connection.

PDN gateway 4 may then identify S203 the PDN connection based on the unique connection ID, which may in particular comprise MN-ID (Mobile Node ID), the APN (Access Point Name) and the PDN connection tag (in particular either bearer ID or uplink GREkey).

The PDN gateway 4 may subsequently send S204 a "Proxy Binding Acknowledgement"-message to the serving gateway 3. The PDN GW may not be aware of the change of the MME, however may be aware about the change in the SGW. The PBU-message received from the new SGW may indicate the change to PDN GW.

The serving gateway 3 may then send S205 a "create bearer response"-message to MME 2.

The handover procedure may then continue S206 as specified in 3GPP TS 23.401 and 3GPP TS 23.402.

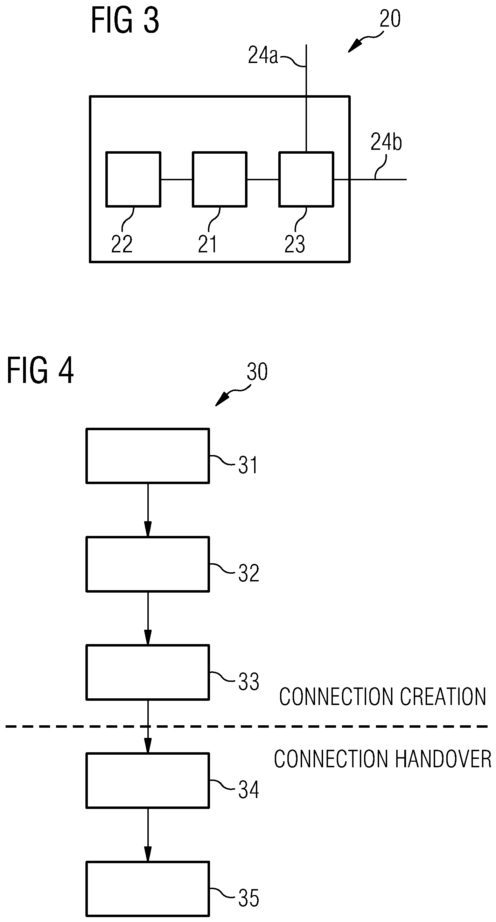

Now referring to Fig. 3, a communication entity according to an exemplary embodiment of the present invention is depicted.

The communication entity 20 comprises a determination unit 21, e.g a microprocessor for determining the unique connection ID or at least a part or an element of the unique connection ID.

The unique connection ID is stored in a storing unit 22 or storage unit for subsequent use during the lifetime of the communication connection.

Using a sending and receiving unit 23, the unique ID is transmitted to a further communication entity to subsequently establish a communication connection 24b.

The communication entity may function as a bridge between communication connection 24b and 24a. Exemplary, both communication connections may employ the same sending and receiving unit 23 or a further sending and receiving unit 23 may be provided in communication entity 20.

For example, an MME 2 may be attached to communication connection 24a and a PDN gateway 4 may be attached to communication connection 24b. In this case, the communication entity 20 may in particular be a serving gateway 3.

Now referring to Fig. 4, a flowchart of the method 30 for providing a communication connection according to an exemplary embodiment of the present invention is depicted.

In a first step 31, a unique connection ID is determined. In a next step 32, the unique connection ID is stored in a first communication entity.

As a further step 33, the unique connection ID is provided to a second communication entity for establishing of a communication connection identified by the unique connection ID.

Steps 31 to 33 thus relate to establishing of a communication connection.

In a further step 34, however independent from steps 31 to 33,
the second communication entity is provided with an indication for a handover of the communication connection identified by the unique connection ID.
As a next step 35, the communication connection identified by
the unique connection ID is handed over from the first communication entity to a third communication entity.

Steps 34 and 35 thus relate to the handover of a communication connection.

It should be noted that the term "comprising" does not exclude other elements or steps and that "a" or "an" does not exclude a plurality. Also, elements described in association with different embodiments may be combined.

It should also be noted, that reference numerals in the claims shall not be construed as limiting the scope of the claims.

A computer-readable medium may be a floppy disk, a CD-ROM, a DVD, a harddisk, a USB (Universal Serial Bus) storage device, a RAM (Read Access Memory), a ROM (Read Only Memory) and an EPROM (Erasable Programmable Read Only Memory).

A computer-readable medium may also be a data communication network, e.g. the internet, which allows downloading a program code.

### Reference numerals

- 1: User equipment/Mobile Node
- 2: Mobility management entity
- 3: Serving gateway
- 4: Packet data network gateway
- 5: Wireless communication connection
- 6a,b: Communication connection
- 7: Service Provider Network

- 20: Communication Entity
- 21: Determination Unit
- 22: Storing unit
- 23: Sending and Receiving Unit
- 24a,b: Communication Connection

- 30: Method for providing a communication connection
- 31: STEP: Determining a unique ID
- 32: STEP: Storing unique ID
- 33: STEP: Providing the unique ID
- 34: STEP: Providing an H/O indication
- 35: STEP: Handover of communication connection

### Acronyms and Terminology

- APN: Access Point Name
- EPS: Evolved Packet System
- GRE: Generic Routing Encapsulation
- GTP: GPRS Tunneling Protocol
- GW: Gateway
- H/O: Handover
- HPLMN: Home Public Land Mobile Network
- ID: Identification
- MME: Mobility Management Entity
- MN-ID: Mobile Node ID
- PBAck: PMIP6 Proxy Binding Acknowledge message
- PBU: PMIP6 Proxy Binding Update message
- PDN GW: Packet Data Network gateway
- PLMN: Public Land Mobile Network
- PMIP: Proxy Mobile IP
- PMIP4: Proxy Mobile IPversion 4
- PMIP6: Proxy Mobile IPversion 6
- SGW: Serving Gateway
- UE: User Equipment
- VPLMN: Visitor Public Land Mobile Network
- VSMO: Vendor Specific Mobility Option

## Claims

1. Method (30) for providing a communication connection, comprising:
determining (31) a unique connection ID;
storing (32) the unique connection ID in a first communication entity;
providing (33) the unique connection ID to a second communication entity for establishing of the communication connection identified by the unique connection ID; and
providing to the second communication entity an indication for handover of the communication connection identified by the unique connection ID (34),
wherein the communication connection is a communication connection according to the Proxy Mobile IP protocol,
wherein the unique connection ID comprises a mobile node ID, an access point name and a bearer ID,
wherein handover of the communication connection, identified by the unique connection ID, is between the first communication entity and a third communication entity (35), and
wherein the mobile node ID, the access point name and the bearer ID of the unique connection ID remain the same during handover.

2. Method according to claim 1, wherein at least one communication entity is one out of the group consisting of a mobile communication device, a network node, a routing device, a gateway, a user equipment, a mobility management entity, a serving gateway and a packet data network gateway.

3. Method according to any of the preceding claims, wherein the providing of the indication for handover of the communication connection identified by the unique connection ID is performed by using a Proxy Binding Update message.

4. Method according to claim 3, wherein the providing of the indication for handover of the communication connection identified by the unique connection ID is performed at least in part by using a Vendor Specific Mobility Option of the Proxy Binding Update message.

5. Communication entity (20), comprising:
a determination unit (21) for determining a unique connection ID;
a storing unit (22) for storing the unique connection ID; and
a sending and receiving unit (23) adapted to transmit an indication for handover of a communication connection (24) identified by the unique connection ID,
wherein the communication connection (24) is a communication connection (24) according to the Proxy Mobile IP protocol,
wherein the unique connection ID comprises a mobile node ID, an access point name and a bearer ID,
wherein handover of the communication connection, identified by the unique connection ID, is between the communication entity and another communication entity, and
wherein the mobile node ID, the access point name and the bearer ID of the unique connection ID remain the same during handover.

6. Communication entity according to claim 5, wherein the communication entity (20) is at least one out of the group consisting of a mobile communication device, a network node, a routing device, a gateway, a user equipment, a mobility management entity, a serving gateway and a packet data network gateway.

7. A computer-readable medium, in which a computer program is stored, which, when being executed by a processor, is adapted to carry out the method according to at least one of the claims 1 to 4.

8. A program element, which, when being executed by a processor, is adapted to carry out the method according to at least one of the claims 1 to 4.

## Patentansprüche

1. Verfahren (30) zum Bereitstellen einer Kommunikationsverbindung, umfassend:
Bestimmen (31) einer eindeutigen Verbindungs-ID;
Speichern (32) der eindeutigen Verbindungs-ID in einer ersten Kommunikationsstruktur;
Bereitstellen (33) der eindeutigen Verbindungs-ID an eine zweite Kommunikationsstruktur zum Herstellen der Kommunikationsverbindung, die durch die eindeutige Verbindungs-ID identifiziert wird; und
Bereitstellen an die zweite Kommunikationsstruktur einer Angabe für Übergabe der Kommunikationsverbindung, die durch die eindeutige Verbindungs-ID (34) identifiziert wird,
wobei die Kommunikationsverbindung eine Kommunikationsverbindung gemäß dem Proxy-Mobile-IP-Protokoll ist,
wobei die eindeutige Verbindungs-ID eine Mobilknoten-ID, einen Zugriffspunktnamen und eine Träger-ID umfasst,
wobei die Übergabe der Kommunikationsverbindung, die durch die eindeutige Verbindungs-ID identifiziert wird, zwischen der ersten Kommunikationsstruktur und einer dritten Kommunikationsstruktur (35) erfolgt, und
wobei die Mobilknoten-ID, der Zugriffspunktname und die Träger-ID der eindeutigen Verbindungs-ID während der Übergabe gleich bleiben.

2. Verfahren nach Anspruch 1, wobei wenigstens eine Kommunikationsstruktur eines aus der Gruppe bestehend aus einer Mobilkommunikationsvorrichtung, einem Netzknoten, einer Routing-Vorrichtung, einem Gateway, einem Benutzergerät, einer Mobilitätsverwaltungsstruktur, einem Bedienungs-Gateway und einem Paketdatennetz-Gateway ist.

3. Verfahren nach einem der vorhergehenden Ansprüche, wobei das Bereitstellen der Angabe für die Übergabe der Kommunikationsverbindung, die durch die eindeutige Verbindungs-ID identifiziert wird, unter Verwendung einer Proxy-Binding-Update-Nachricht durchgeführt wird.

4. Verfahren nach Anspruch 3, wobei das Bereitstellen der Angabe für die Übergabe der Kommunikationsverbindung, die durch die eindeutige Verbindungs-ID identifiziert wird, wenigstens teilweise unter Verwendung einer herstellerspezifischen Mobilitätsoption der Proxy-Binding-Update-Nachricht durchgeführt wird.

5. Kommunikationsstruktur (20), umfassend:
eine Bestimmungseinheit (21) zum Bestimmen einer eindeutigen Verbindungs-ID;
eine Speichereinheit (22) zum Speichern der eindeutigen Verbindungs-ID; und
eine Sende- und Empfangseinheit (23), die dafür eingerichtet ist, eine Angabe für die Übergabe einer Kommunikationsverbindung (24), die durch die eindeutige Verbindungs-ID identifiziert wird, zu übertragen,
wobei die Kommunikationsverbindung (24) eine Kommunikationsverbindung (24) gemäß dem Proxy-Mobile-IP-Protokoll ist,
wobei die eindeutige Verbindungs-ID eine Mobilknoten-ID, einen Zugriffspunktnamen und eine Träger-ID umfasst,
wobei die Übergabe der Kommunikationsverbindung, die durch die eindeutige Verbindungs-ID identifiziert wird, zwischen der Kommunikationsstruktur und einer anderen Kommunikationsstruktur erfolgt, und
wobei die Mobilknoten-ID, der Zugriffspunktname und die Träger-ID der eindeutigen Verbindungs-ID während der Übergabe gleich bleiben.

6. Kommunikationsstruktur nach Anspruch 5, wobei die Kommunikationsstruktur (20) wenigstens eines aus der Gruppe bestehend aus einer Mobilkommunikationsvorrichtung, einem Netzknoten, einer Routing-Vorrichtung, einem Gateway, einem Benutzergerät, einer Mobilitätsverwaltungsstruktur, einem Bedienungs-Gateway und einem Paketdatennetz-Gateway ist.

7. Computerlesbares Medium, in dem ein Computerprogramm gespeichert ist, das, wenn es durch einen Prozessor ausgeführt wird, dafür eingerichtet ist, das Verfahren nach wenigstens einem der Ansprüche 1 bis 4 durchzuführen.

8. Programmelement, das, wenn es durch einen Prozessor ausgeführt wird, dafür eingerichtet ist, das Verfahren nach wenigstens einem der Ansprüche 1 bis 4 durchzuführen.

## Revendications

1. Procédé (30) pour fournir une connexion de communication, comprenant :
la détermination (31) d'un identifiant (ID) de connexion unique ;
le stockage (32) de l'ID de connexion unique dans une première entité de communication ;
la fourniture (33) de l'ID de connexion unique à une deuxième entité de communication pour l'établissement de la connexion de communication identifiée par l'ID de connexion unique ; et
la fourniture à la deuxième entité de communication d'une indication pour transfert intercellulaire de la connexion de communication identifiée par l'ID de connexion unique (34),
dans lequel la connexion de communication est une connexion de communication en fonction du protocole IP mobile avec proxy,
dans lequel l'ID de connexion unique comprend un ID de noeud mobile, un nom de point d'accès et un ID de porteuse,
dans lequel un transfert intercellulaire de la connexion de communication, identifiée par l'ID de connexion unique, se fait entre la première entité de communication et une troisième entité de communication (35), et
dans lequel l'ID de noeud mobile, le nom de point d'accès et l'ID de porteuse de l'ID de connexion unique restent les mêmes pendant un transfert intercellulaire.

2. Procédé selon la revendication 1, dans lequel au moins une entité de communication est un élément du groupe constitué par un dispositif de communication mobile, un noeud de réseau, un dispositif de routage, une passerelle, un équipement utilisateur, une entité de gestion de mobilité, une passerelle de desserte et une passerelle de réseau de données par paquets.

3. Procédé selon l'une quelconque des revendications précédentes, dans lequel la fourniture de l'indication pour un transfert intercellulaire de la connexion de communication identifiée par l'ID de connexion unique est réalisée en utilisant un message de mise à jour de liaison proxy.

4. Procédé selon la revendication 3, dans lequel la fourniture de l'indication pour un transfert intercellulaire de la connexion de communication identifiée par l'ID de connexion unique est réalisée, au moins en partie, en utilisant une option de mobilité spécifique au vendeur du message de mise à jour de liaison proxy.

5. Entité de communication (20) comprenant :
une unité de détermination (21) pour déterminer un ID de connexion unique ;
une unité de stockage (22) pour stocker l'ID de connexion unique ; et
une unité d'envoi et de réception (23) conçue pour transmettre une indication pour un transfert intercellulaire d'une connexion de communication (24) identifiée par l'ID de connexion unique,
dans laquelle la connexion de communication (24) est une connexion de communication (24) en fonction du protocole IP mobile avec proxy,
dans laquelle l'ID de connexion unique comprend un ID de noeud mobile, un nom de point d'accès et un ID de porteuse,
dans laquelle un transfert intercellulaire de la connexion de communication, identifiée par l'ID de connexion unique, se fait entre l'entité de communication et une autre entité de communication, et
dans laquelle l'ID de noeud mobile, le nom de point d'accès et l'ID de porteuse de l'ID de connexion unique restent les mêmes pendant un transfert intercellulaire.

6. Entité de communication selon la revendication 5, dans laquelle l'entité de communication (20) est au moins un élément du groupe constitué par un dispositif de communication mobile, un noeud de réseau, un dispositif de routage, une passerelle, un équipement utilisateur, une entité de gestion de mobilité, une passerelle de desserte et une passerelle de réseau de données par paquets.

7. Support lisible par ordinateur, dans lequel un programme d'ordinateur est stocké, qui, lorsqu'il est exécuté par un processeur, est conçu pour mettre en oeuvre le procédé selon au moins l'une des revendications 1 à 4.

8. Élément de programme qui, lorsqu'il est exécuté par un processeur, est conçu pour mettre en oeuvre le procédé selon au moins l'une des revendications 1 à 4.
